(19) Europäisches Patentamt
European Patent Office
Office européen des brevets

(11) **EP 3 346 603 A1**

(12) **EUROPEAN PATENT APPLICATION**

(43) Date of publication:
**11.07.2018 Bulletin 2018/28**

(51) Int Cl.:
*H02P 21/24* (2016.01)    *H02P 21/18* (2016.01)
*H02P 21/00* (2016.01)

(21) Application number: **18150383.0**

(22) Date of filing: **04.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **06.01.2017 US 201762443334 P**
**26.07.2017 US 201715660559**

(71) Applicant: **Honeywell International Inc.**
**Morris Plains, NJ 07950 (US)**

(72) Inventors:
• **STRONG, Ronald E.**
**Morris Plains, NJ 07950 (US)**
• **HAMILTON, Brian**
**Morris Plains, NJ 07950 (US)**
• **KREIDER, Thomas R.**
**Morris Plains, NJ 07950 (US)**

(74) Representative: **Houghton, Mark Phillip**
**Patent Outsourcing Limited**
**1 King Street**
**Bakewell, Derbyshire DE45 1DZ (GB)**

(54) **SYSTEM AND METHOD FOR CONTROLLING A MOTOR**

(57) Systems and methods are provided for controlling a motor having a rotor and a stator. A motor control module having a processor and a memory is in communication with the motor and is configured to receive an input torque command signal and control a stator current of the motor. The motor control module is further configured to calculate an angular acceleration of the rotor based on the input torque command signal and a rotor inertia. The motor control module calculates an angular velocity based on the calculated angular acceleration of the rotor. The motor control module calculates a stator flux angle based on the calculated angular velocity of the rotor and controls the stator current to generate a magnetic flux at the calculated stator flux angle based on the input torque command signal.

FIG. 2

**Description**

CROSS-REFERENCE TO RELATED APPLICATION

This application claims the benefit of U.S. Provisional Application No. 62/443,334, filed January 6, 2017, the entirety of which is incorporated herein by reference.

TECHNICAL FIELD

The exemplary embodiments described herein generally relate to controlling motors and more particularly to using open loop torque control of field oriented control motors at low speeds.

BACKGROUND

Permanent Magnet Synchronous Motors (PMSM), sometimes referred to as Permanent Magnet AC motors (PMAC) are often controlled using a Field Oriented Control (FOC) scheme. Compared to six step or trapezoidal brushless DC motors, these motors provide very little if any torque ripple when driven with continuous sinusoidal input power. For the FOC drive, the quality of the output torque relative to commanded torque is partially dependent on the resolution of the rotor angle feedback. Thus an accurate rotor angle sensor such as a resolver or encoder is used to give precise feedback.

However, in some systems, to reduce cost or parts, angular position is estimated from the motor back electromagnetic field or a low resolution position sensor such as a hall sensor. These methods usually require the motor to reach a certain speed to provide enough signal, or enough updates, for acceptable control. For example, an angle estimate based on hall sensor feedback can be unusable as the speed falls below a critical threshold toward zero. For an application such as a Reaction Wheel, it is desirable to be able to provide good torque control at low speeds and while crossing through zero speed.

Accordingly, it is desirable to provide a system and method for controlling a motor through the low speed regions while accurately tracking an input torque command. When the absolute motor speed falls below the critical threshold, the method transitions the motor controller to a mode which propagates the stator magnetic field without rotor position feedback using the input torque command and a measurement of time. Furthermore, other desirable features and characteristics of the exemplary embodiments will become apparent from the subsequent detailed description and the appended claims, taken in conjunction with the accompanying drawings and the foregoing technical field and background.

BRIEF SUMMARY

In an exemplary embodiment, a system for controlling a motor having a rotor and a stator includes a motor control module having a processor and a memory. The motor control module is in communication with the motor and is configured to receive an input torque command signal and control a stator current of the motor. The motor control module is further configured to calculate an angular acceleration of the rotor based on the input torque command signal and a rotor inertia. The motor control module calculates an angular velocity based on the calculated angular acceleration of the rotor and calculates a stator flux angle. The motor control module controls the stator current to generate a magnetic flux at the calculated stator flux angle to complete the forward control path to the motor..

In an exemplary embodiment, an apparatus includes a motor having a rotor and a stator. The apparatus further includes a motor control module having a processor and a memory. The motor control module is in communication with the motor and is configured to receive an input torque command signal and control a stator current of the motor. The motor control module is further configured to calculate an angular acceleration of the rotor based on the input torque command signal and the rotor inertia. The motor control module calculates an angular velocity based on the calculated angular acceleration of the rotor and calculates a stator flux angle. The motor control module controls the stator current to generate a magnetic flux at the calculated stator flux angle to complete the forward control path to the motor.

In an exemplary embodiment, a method for controlling a motor having a rotor and a stator includes calculating an angular acceleration of the rotor based on an input torque command signal and a rotor inertia. The method further includes calculating an angular velocity based on the calculated angular acceleration of the rotor and calculating a stator flux angle based on the calculated angular velocity of the rotor. A stator current is controlled to generate a magnetic flux at the calculated stator flux angle based on the input torque command signal.

BRIEF DESCRIPTION OF THE DRAWINGS

The present invention will hereinafter be described in conjunction with the following drawing figures, wherein like numerals denote like elements, and

FIG. 1 is a block diagram of an exemplary system for controlling a motor having a rotor and a stator;

FIG. 2 is a schematic diagram of an exemplary system for controlling a motor with a low speed control region and a high speed control region;

FIG. 3 is a block diagram of an exemplary apparatus including a motor having a rotor and a stator and a system for controlling the motor; and

FIG. 4 a flow diagram of an exemplary method suitable for use with the systems of FIGS. 1-3 in accordance with the exemplary embodiments.

DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The word "exemplary" is used exclusively herein to mean "serving as an example, instance, or illustration." Any embodiment described herein as "exemplary" is not necessarily to be construed as preferred or advantageous over other embodiments. Any of the above devices are exemplary, non-limiting examples of a computer readable storage medium.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal. Any of the above devices are exemplary, non-limiting examples of a computer readable storage medium

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

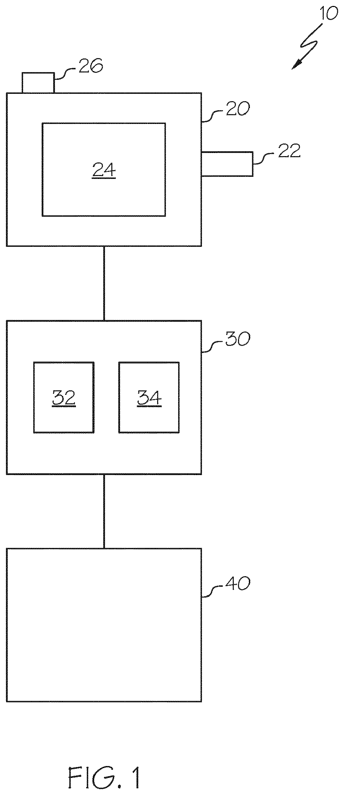

With reference now to Figure 1, a system 10 for controlling a motor 20 having a rotor 22 and a stator 24 is shown herein. The system 10 also includes a motor control module 30 having a processor 32 and a memory 34. The components of the system are generally in electronic communication such that supply power and communication signals can be exchanged between the motor 20 and the motor control module 30. In a non-limiting embodiment, the system 10 further includes an input controller 40 that supplies an input torque command signal to the motor control module 30.

The motor 20 has the rotor 22 and the stator 24. In a non-limiting embodiment, the motor 20 is a Permanent Magnet Synchronous Motors (PMSM) or a Permanent Magnet AC motors (PMAC). These motors 20 are often controlled using a Field Oriented Control (FOC) scheme in which stator currents are identified as two orthogonal components that can be visualized with a vector. The control system of the drive calculates the corresponding current component references from the flux and torque references given by the drive's speed control. Typically proportional-integral (PI) controllers are used to keep the measured current components at their reference values. The pulse-width modulation of the drive defines the transistor switching according to the stator voltage references that are the output of the PI current controllers. Other types of motors 20 suitable for use in the system 10 include Brushless DC Motors or other types of motors known to those skilled in the art.

The motor control module 30 has the processor 32 and the memory 34. The motor control module 30 may be implemented as a discrete component in hardware or integrated with existing motor control hardware, provided the motor control module 30 is configured to the disclosed control of the motor 20. In a non-limiting embodiment, the motor control module 30 is configured to receive an input torque command signal and control the stator current of the motor 20 based on the input torque command signal.

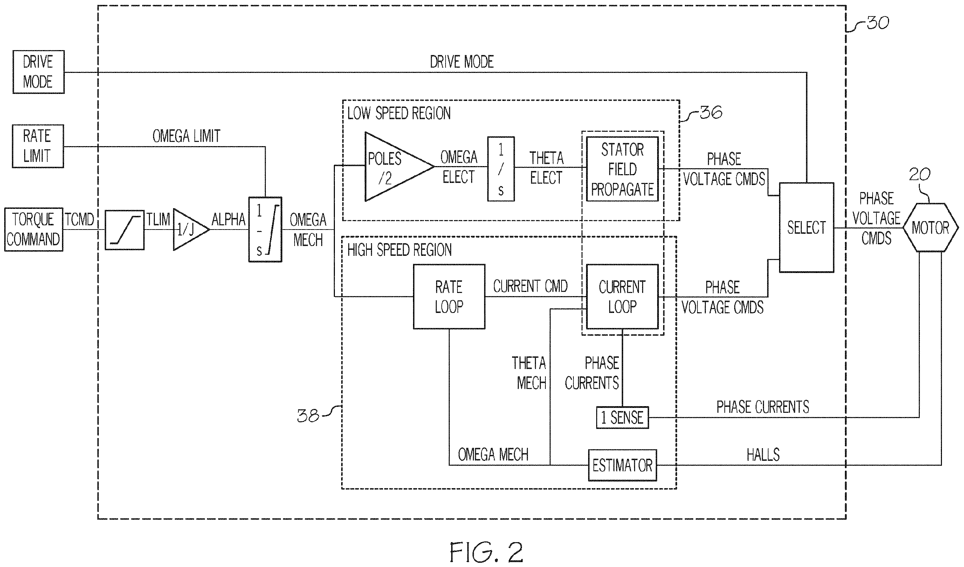

With continued reference to Figure 1, the operation of the motor control module 30 will further be described relative to Figure 2. The motor control module 30 is configured to calculate an angular acceleration of the rotor 22 based on the input torque command signal and a rotor inertia. The rotor inertia is a physical property of the rotor 22 and is also known as the moment of inertia or the angular mass of the rotor 22 and determines the torque needed for a desired angular acceleration about a rotational axis of the rotor 22. In a non-limiting embodiment, the angular acceleration of the rotor 22 is calculated by dividing the input torque command signal by the rotor inertia.

The motor control module 30 is further configured to calculate an angular velocity of the rotor 22 based on the previously calculated angular acceleration of the rotor 22. The angular velocity of the rotor 22 is the rate of change of the angular position of the rotor 22. Stated differently, the angular velocity of the rotor 22 is the speed with which the rotor 22 rotates about its rotational axis, commonly referred to in revolutions per minute (RPM). In a non-limiting embodiment, the angular velocity of the rotor 22 is calculated by integrating the previously calculated angular acceleration of the rotor 22.

The motor control module 30 is further configured to calculate a stator flux angle based on the previously calculated angular velocity of the rotor 22. In a non-limiting embodiment, the stator flux angle is calculated by integrating the previously calculated angular velocity of the rotor 22. The motor control module 30 is further configured to control the stator current of the motor 20 to generate a magnetic flux at the previously calculated stator flux angle to drive the rotor 22 based on the input torque command signal. In this way, the motor control module 30 propagates the magnetic field of the stator 24 to control the motor 20 without feedback on the angular position of the rotor 22.

In a non-limiting embodiment, the stator flux angle is calculated based on the torque command received by the unit which is limited then integrated twice. Various integration methods may be used such as discrete Forward Euler, Backward Euler, or Trapezoidal methods. The following exemplary equations (1)-(4) depict using the Forward Euler method:

$$\text{Torque} = \text{Torque Command limited to a maximum value} \qquad (1)$$

$$\text{Acceleration}(n) = \text{Torque}(n) / \text{Inertia} \qquad (2)$$

$$Rate(n) = Rate(n-1) + Acceleration(n) * SamplePeriod \qquad (3)$$

$$Angle(n) = Angle(n-1) + Rate * SamplePeriod \qquad (4)$$

Where n is the periodic sample number and Rate(0) and Angle(O) are initial conditions.

In a non-limiting embodiment, the motor control module 30 is configured to limit the input torque command signal to allow for a predetermined maximum acceleration of the rotor 22. In a non-limiting embodiment, the motor control module 30 is configured to limit the input torque command signal to allow for a predetermined maximum motor speed. Bounding the input torque command signal in this way allows the rotor 22 to follow the propagation of the magnetic field from the stator 24 without slipping from one motor pole to the next. The motor control module 30 limits the input torque command signal as described above to minimize and prevent slipping of the motor 20.

In a non-limiting embodiment, the motor control module 30 is further configured to adjust the input torque command based on at least one predetermined motor property selected from the group consisting of: a maximum motor torque, a maximum motor power rating, or combinations thereof. Further to the limiting of the input torque command signal described above, the motor control module 30 can adjust the input torque command signal based on properties of the motor 30. This adjustment can further reduce slippage of the motor 20 by tailoring the control to the specific motor 20.

In a non-limiting embodiment of the system 10, the motor 20 includes a motor sensor 26 configured to monitor an operating speed of the motor 20 and provide feedback to the motor control module 30. In a non-limiting embodiment, the sensor 26 is a Hall Effect sensor that monitors an angular position of the rotor 22. In a non-limiting embodiment, the sensor 26 is a digital Hall Effect sensor. Generally, Hall Effect sensors are analog. The sensor 26 includes an analog comparator (not shown) which allows the sensor 26 to output a digital signal. The comparator is set to transition at a specific input voltage which represents a threshold of magnetic field strength or polarity of the field. One skilled in the art will appreciate that the use of the digital output signal to control the motor 20 is different than using an analog output signal.

The sensor 26 provides feedback to motor control module 30 relating to the position of the rotor 22. As detailed above, when the motor 20 is operating at a low speed, Hall Effect sensors 26 may not be able to provide the motor control module 30 with an accurate position of the rotor 22 for feedback based control. While other sensors 26 may be used to sense the position of the rotor 22 when the motor 20 is operating at a low speed, these sensors are more expensive and complex than Hall Effect sensors 26.

Accordingly, in a non-limiting embodiment of the system 10, when an update frequency from the sensor 26 drops below a predetermined threshold, the motor control module 30 controls the motor 20 with an open loop (no feedback) control method 36, as detailed above, that does not use position data from the sensor 26 when the motor 20 is operating at a low speed. The motor control module 30 then controls the motor 20 with a closed loop control method 38 that does use position data from the sensor 26 when the motor 20 is operating at a high speed. In a non-limiting embodiment, the motor control module 30 controls the motor 20 with the open loop control method 36 when the sensed motor speed is less than a predetermined threshold and controls the motor 20 with the closed loop control method 38 when the sensed motor speed is greater than or equal to the predetermined threshold. In this way, the motor control module 30 controls the motor 20 at low speed with the open loop control method 36 when the sensor 26 may not provide reliable rotor 22 position data and controls the motor at high speed with the closed loop control method 38 when the sensor 26 is able to provide accurate rotor 22 position data. The predetermined threshold used to determine when the motor control module 30 switches between the open loop control method 36 and the closed loop control method 38 may be set based upon an operating speed of the motor 20 dependent on the performance of sensor 26.

In a non-limiting embodiment, the motor control module 30 is configured to transition the control of the motor 20 from the open loop control method 36 to the closed loop control method 38 when the detected speed derived from sensor 26 feedback to the motor control module 30 exceeds a predetermined threshold. As detailed above, Hall Effect sensors 26 may not provide position data to the motor control module 30 at sufficient frequency until the motor 20 is rotating fast enough for the motor controller to derive motor speed information using sensor 26. Accordingly, the motor control module 30 will wait to transition to the closed loop control method 38 until the sensor 26 is providing position data at suitable frequency to the motor control module 30.

In a non-limiting embodiment, the motor control module 30 is configured to transition the control of the motor 20 from the closed loop control method 38 to the open loop control method 36 when the operating motor speed is less than a predetermined threshold. Accordingly, the motor control module 30 will transition to the open loop control method 36 when the operating motor speed drops below the predetermined threshold.

In a non-limiting embodiment, the open loop control method 36 may be limited to operating the motor 20 at low speeds, low torque, or when there is a low load on the motor 20. Furthermore, the motor control module 30 may not switch to the open loop control method 36 until the motor 20 operates at a low speed for a predetermined period of time. Accordingly, the motor control module may not instantaneously switch back and forth between the open loop control method 36 and the closed loop control method 38.

In this way, the system 10 provides for a motor control module 30 that propagates the magnetic field of the stator 24 to control the motor 20 without feedback on the angular position of the rotor 22. Furthermore, the motor control module 30 calculates the stator flux angle based only on physical properties of the motor 20 and the input torque command signal. This is turn allows for the motor control module 30 to control the motor 20 without continuous rotor position data from the sensor 26.

The components of the system 10 have been shown as discrete blocks in the representation of Figure 1 to aid in understanding how the system 10 controls the motor 20. However, one skilled in the art will appreciate that the components including the motor 20, motor control module 30, and input controller 40 may be combined with one another in various forms without departing from the spirit of the present disclosure.

It should be understood that Figures 1 and 2 are simplified representations of a system 10 for purposes of explanation and ease of description, and Figures 1 and 2 are not intended to limit the application or scope of the subject matter in any way. In practice, the system 10 will include numerous other devices and components for providing additional functions and features, as will be appreciated in the art.

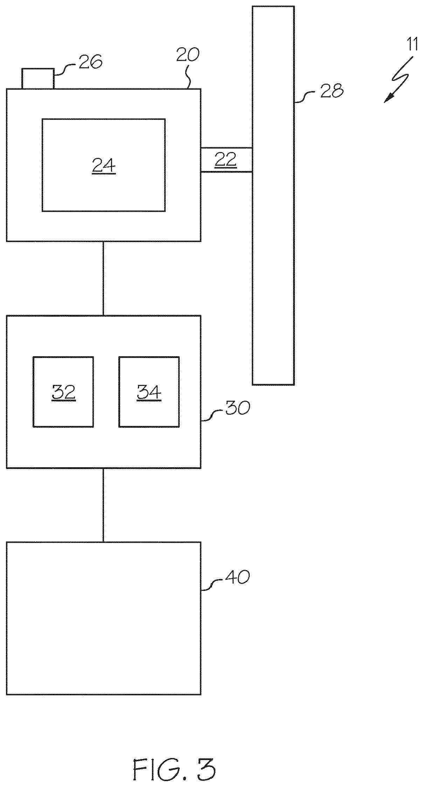

With reference now to Figure 3, an apparatus 11 is shown herein. As apparatus 11 includes many of the same components from system 10 from Figure 1, the same reference numbers will be used and referenced when appropriate. Accordingly, the discussion of apparatus 11 will relate to the features that differ relative in system 10. The apparatus 11 includes the motor 20, motor control module 30, and the input controller 40.

In contrast to the system 10, the apparatus 11 further includes a flywheel 28. The flywheel 28 is connected to the rotor 22 of the motor 20 and is configured to store angular momentum. The motor 20 rotates the flywheel 28 and the angular momentum in the flywheel 28 can be used for attitude control in spacecraft or to adjust trajectory.

In a non-limiting embodiment, the motor control module 30 is configured to calculate the angular acceleration of the rotor 22 and the flywheel 28 together as a system. Stated differently, the input torque signal is divided by the sum of the angular momentums of both the rotor 22 and the flywheel 28 to calculate the angular acceleration. The remaining operation and control of the apparatus 11 is unchanged relative to the system 10 from Figures 1 and 2.

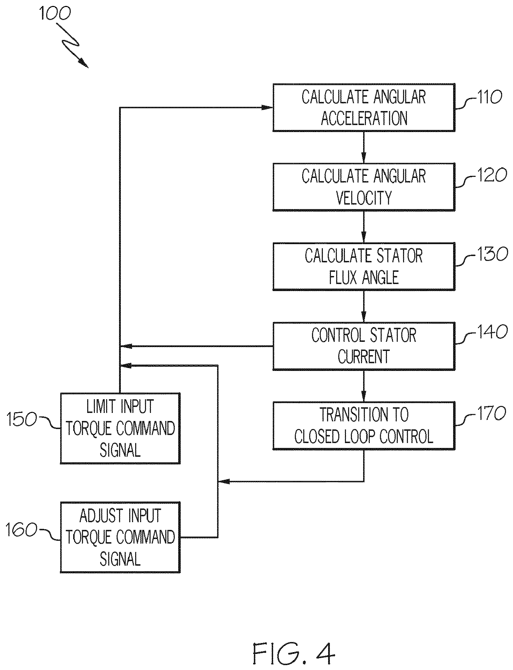

Referring now to Figure 4, and with continued reference to Figures 1-3, a flowchart illustrates a method 100 performed by the system 10 and apparatus 11 of Figures 1-3 in accordance with the present disclosure. As can be appreciated in light of the disclosure, the order of operation within the method 100 is not limited to the sequential execution as illustrated in Figure 4, but may be performed in one or more varying orders as applicable and in accordance with the requirements of a given application.

In various exemplary embodiments, the system 10, apparatus 11, and method 100 are operated based on predetermined events, such as starting of the motor 20. Method 100 may be performed by the system 10, apparatus 11, or may be performed by any other suitable device or system configured in a manner consistent with the teachings of the present disclosure. Unless otherwise noted, the method 100 may be performed by any of the embodiments of the system 10 or apparatus 11 previously described above.

The method 100 starts at block 110 calculating an angular acceleration of the rotor based on an input torque command signal and a rotor inertia. In a non-limiting embodiment, the motor control module 30 calculates the angular acceleration of the rotor 22 by dividing the input torque command signal by the rotor inertia. At block 120, the method 100 calculates an angular velocity based on the calculated angular acceleration of the rotor from block 110. In a non-limiting embodiment, the motor control module 30 calculates the angular velocity by integrating the previously calculated angular acceleration.

At block 130, the method 100 calculates a stator flux angle based on the calculated angular velocity of the rotor from block 120. In a non-limiting embodiment, the motor control module 30 calculates the stator flux angle by integrating the previously calculated angular velocity of the rotor 22.

At block 140, the method controls a stator current to generate a magnetic flux at the calculated stator flux angle from block 130 based on the input torque command signal. In a non-limiting embodiment, the motor control module 30 controls the stator current of the motor 20 to generate the magnetic flux at the previously calculated stator flux angle to drive the rotor 22 based on the input torque command signal. From block 140, the method 100 returns to block 110 and calculates the angular acceleration of the rotor. In this way, the method 100 propagates the magnetic field of the stator 24 to control the motor 20 without feedback on the angular position of the rotor 22.

In a non-limiting embodiment, the method 100 further includes block 150 and limits the input torque command signal before calculating the angular acceleration at block 110. In a non-limiting embodiment, the input torque command signal is limited to allow for a predetermined maximum acceleration. In a non-limiting embodiment, the input torque command signal is limited to allow for a predetermined maximum motor speed.

In a non-limiting embodiment, the method 100 further includes block 160 and adjusts the input torque command signal before calculating the angular acceleration at block 110. In a non-limiting embodiment, the input torque command signal is adjusted based on at least one predetermined motor property selected from the group consisting of: a maximum motor torque, a maximum motor power rating, or combinations thereof.

In a non-limiting embodiment, the method 100 further includes block 170 and transitions from an open loop control method to a closed loop control method. In a non-limiting embodiment, the method 100 transitions to the closed loop control when an operating motor speed is greater than a predetermined threshold.

In a non-limiting embodiment, the method 100 transitions from the closed loop control to the open loop control when the operating motor speed is less than the predetermined threshold.

In a non-limiting embodiment, the method 100 controls the stator current to generate the magnetic flux at the calculated stator flux angle based on the input torque command signal without knowledge of a position of the rotor.

In this way, the disclosed system 10, apparatus 11, and method 100 involves propagating an angular position for the stator magnetic flux vector based on a commanded torque (or acceleration). The input torque command signal is divided by the inertia to get an angular acceleration, which is integrated to get an angular velocity, which is then integrated again to get the calculated stator flux angle. The input torque command signal may be bounded to limit the system to desired maximum acceleration and also to allow the free rotor 22 to follow the stator 24 magnetic field without slipping. The torque to speed integrator is limited to the maxim and minimum allowable speeds.

The rotor 22 magnet follows the stator flux vector with an angle that generates enough torque overcome friction and accelerate along with the stator flux. The ability of the rotor 22 to follow the stator flux is dependent on the magnitude of the stator flux, thus the magnitude of the winding phase currents, and the angular acceleration of the stator flux. Using a large current command and clamping the stator flux vector's angular acceleration can ensure tracking.

This method 100 can be used in a field oriented controller (FOC) by using the propagated angular position for transforming currents and voltages from the fixed stator 24 frame to the rotor 22 (direct-quadrature) frame. In the low speed (open loop control) region, the motor control module 30 switches to use the propagated stator flux angle. In this mode, the current command vector is set to a value large enough to prevent the rotor 22 from slipping poles at the maximum acceleration. The motor control module 30 will then generate a magnetic flux vector at the desired rate and acceleration.

The result is a permanent magnet motor 20 controller that provides fine torque control using low cost or simple position sensing 26 at higher speeds, while still providing good torque in low speed regions and through zero crossing where the motor position sensor 26 is inadequate.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

**Claims**

1. A system for controlling a motor having a rotor and a stator, the system comprising:

   a motor control module having a processor and a memory, the motor control module in communication with the motor and configured to receive an input torque command signal and control a stator current of the motor,

   wherein the motor control module is further configured to calculate an angular acceleration of the rotor based on the input torque command signal and a rotor inertia, calculate an angular velocity based on the calculated angular acceleration of the rotor, calculate a stator flux angle based on the calculated angular velocity of the rotor, and control the stator current to generate a magnetic flux at the calculated stator flux angle based on the input torque command signal.

2. The system of claim 1 wherein the input torque command signal is limited to allow for a predetermined maximum acceleration.

3. The system of claim 1 wherein the input torque command signal is limited to allow for a predetermined maximum motor speed.

4. The system of claim 1 wherein the motor control module is further configured to adjust the input torque command signal based on at least one predetermined motor property selected from the group consisting of: a maximum motor torque, a maximum motor power rating, or combinations thereof.

5. The system of claim 1 further comprising:

a motor sensor configured to monitor an operating speed of the motor and provide feedback to the motor control module,
wherein the motor control module controls the motor with an open loop control method when the operating speed is less than a predetermined threshold and controls the motor with a closed loop control method when the operating speed is greater than or equal to the predetermined threshold.

6. The system of claim 5 wherein the motor control module is configured to transition the control of the motor to the closed loop control method when the motor sensor provides feedback to the motor control module at a frequency greater than a predetermined frequency.

7. The system of claim 5 wherein the motor control module is configured to transition the control of the motor from the closed loop control method to the open loop control method when the operating speed is less than the predetermined threshold.

8. A method for controlling a motor having a rotor and a stator, the method comprising:

calculating an angular acceleration of the rotor based on an input torque command signal and a rotor inertia;
calculating an angular velocity based on the calculated angular acceleration of the rotor;
calculating a stator flux angle based on the calculated angular velocity of the rotor;
controlling a stator current to generate a magnetic flux at the calculated stator flux angle based on the input torque command signal.

9. The method of claim 8, further comprising:

limiting the input torque command signal to allow for a predetermined maximum acceleration.

10. The method of claim 8, further comprising:

limiting the input torque command signal to allow for a predetermined maximum motor speed.

11. The method of claim 8, further comprising:

adjusting the input torque command signal based on at least one predetermined motor property selected from the group consisting of: a maximum motor torque, a maximum motor power rating, or combinations thereof.

12. The method of claim 8, further comprising:

controlling the motor with an open loop control method; and
transitioning the control to from the open loop control method to a closed loop control method when an operating motor speed is greater than a predetermined threshold.

13. The method of claim 12, further comprising:

transitioning the control from the closed loop control method to the open loop control method the operating motor speed is less than the predetermined threshold.

14. The method of claim 8, further comprising:

**EP 3 346 603 A1**

controlling the stator current to generate the magnetic flux at the calculated stator flux angle based on the input torque command signal without knowledge of a position of the rotor.

**9**

FIG. 1

FIG. 2

FIG. 3

*100*

```
                                    ┌──────────────────┐
                                    │ CALCULATE ANGULAR│⟋110
                                    │   ACCELERATION   │
                                    └──────────────────┘
                                             │
                                             ▼
                                    ┌──────────────────┐
                                    │ CALCULATE ANGULAR│⟋120
                                    │     VELOCITY     │
                                    └──────────────────┘
                                             │
                                             ▼
                                    ┌──────────────────┐
                                    │ CALCULATE STATOR │⟋130
                                    │    FLUX ANGLE    │
                                    └──────────────────┘
                                             │
                                             ▼
                                    ┌──────────────────┐
                                    │  CONTROL STATOR  │⟋140
                                    │     CURRENT      │
                                    └──────────────────┘
                                             │
                                             ▼
  ┌──────────────────┐               ┌──────────────────┐
  │   LIMIT INPUT    │               │   TRANSITION TO  │⟋170
150│ TORQUE COMMAND   │               │CLOSED LOOP CONTROL│
  │     SIGNAL       │               └──────────────────┘
  └──────────────────┘

  ┌──────────────────┐
  │   ADJUST INPUT   │
160│ TORQUE COMMAND   │
  │     SIGNAL       │
  └──────────────────┘
```

FIG. 4

Europäisches
Patentamt

European
Patent Office

Office européen
des brevets

## EUROPEAN SEARCH REPORT

**Application Number**

EP 18 15 0383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/221885 A1 (HUNTER GREGORY PETER [AU]) 29 August 2013 (2013-08-29) * paragraphs [0001], [0013] - [0020], [0022], [0059], [0203] - [0212], [0233], [0264], [0324], [0345]; figures 2,12 * | 1-14 | INV. H02P21/24 H02P21/18 H02P21/00 |
| A | US 2014/028224 A1 (ARIMA HIROKI [JP]) 30 January 2014 (2014-01-30) * paragraph [0020] - paragraph [0028]; claim 1; figure 1 * ----- | 1-14 | |

**TECHNICAL FIELDS SEARCHED (IPC)**

H02P

The present search report has been drawn up for all claims

| Place of search | Date of completion of the search | Examiner |
|---|---|---|
| Munich | 11 May 2018 | Kruip, Stephan |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

................................................................................

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 18 15 0383

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2018

| Patent document cited in search report | | Publication date | Patent family member(s) | | Publication date |
|---|---|---|---|---|---|
| US 2013221885 | A1 | 29-08-2013 | EP | 2636142 A1 | 11-09-2013 |
| | | | US | 2013221885 A1 | 29-08-2013 |
| | | | WO | 2011054032 A1 | 12-05-2011 |
| US 2014028224 | A1 | 30-01-2014 | CN | 103580574 A | 12-02-2014 |
| | | | EP | 2690777 A2 | 29-01-2014 |
| | | | JP | 6014401 B2 | 25-10-2016 |
| | | | JP | 2014027742 A | 06-02-2014 |
| | | | US | 2014028224 A1 | 30-01-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62443334 A